# EUROPÄISCHE PATENTANMELDUNG

(11) **EP 4 541 708 A1**
(43) Veröffentlichungstag der Anmeldung: **23.04.2025**
(21) Anmeldenummer: 24205197.7
(22) Anmeldetag: 08.10.2024
(51) Int. Cl.: B63B 27/14, E02B 3/20, H02G 11/00, E02B 3/06

(54) **VORRICHTUNG ZUR VERBINDUNG EINES SCHIFFES MIT EINEM LANDSEITIGEN VERSORGUNGSNETZ**

(30) Priorität: 16.10.2023 DE 102023128281
(71) Anmelder: Stemmann-Technik GmbH, 48465 Schüttorf (DE)
(72) Erfinder: Gaigneux, Christophe, 38530 Pontcharra (FR)
(74) Vertreter: Griepenstroh, Jörg

(57) **Zusammenfassung**

Vorrichtung 1 zur Verbindung eines Schiffes mit einem landseitigen Versorgungsnetz, umfassend eine Passagierbrücke 4, wobei die Passagierbrücke 4 dauerhaft auf einem landseitigen Kai 5 angeordnet ist, wobei an der Passagierbrücke 4 eine Energieversorgungsleitung 9 zur Versorgung des Schiffes 2 mit Landstrom während der Schiffsabfertigung angeordnet ist, und mit einer Übergabeeinrichtung 10, um eine an die Energieversorgungsleitung 9 angeschlossene Kupplungseinheit 12 zu einer schiffseitigen Kupplungseinheit zu führen.

## Beschreibung

Die Erfindung betrifft eine Vorrichtung zur Verbindung eines Schiffes mit einem landseitigen Versorgungsnetz gemäß den Merkmalen des Patentanspruches 1.

Seeschiffe brauchen im Hafen Energie für den Betrieb der Bordsysteme. Die Versorgung mit externem Strom, sogenanntem Landstrom, während der Liegezeit erfolgt über Kabel von einer Stromquelle eines landseitigen Versorgungsnetzes am Kai zu einer Steckdose an Bord. Die Anschlussleistung von einigen Schiffstypen, z.B. Kreuzfahrtschiffen, ist extrem hoch und liegt bei mehreren MW, was hohe Investitionen in die Infrastruktur erfordert. Andererseits ist die Liegezeit und damit die Anschlusszeit selten länger als 24 Stunden, d.h. der Preis pro Kilowatt-Stunde elektrischer Energie ist relativ hoch, damit sich die Investition in die Infrastruktur rentiert.

Es ist Stand der Technik, dass Anschlusspunkte für elektrische Leitungen im Bereich des Kais unterirdisch angeordnet sind, um die Anschlüsse bei Nichtbedarf vor herunterfallenden Gegenständen zu schützen. Offenliegende Energieführungsleitungen wären ein Hindernis für Fahrzeuge aller Art. Sie können nicht überfahren werden, dürfen nicht beschädigt werden und haben große Querschnitte und ein erhebliches Gewicht. Die Handhabung dieser Versorgungsleitungen erfolgt daher überwiegend mechanisiert. Unabhängig von der Vorrichtung, die zur Übergabe des Steckers von Land an Bord vorgesehen ist, ergibt sich jedoch stets das Problem, dass der Übergabepunkt je nach Schiffstyp und Anlegeposition variiert, mit der Folge, dass die Energieversorgungsleitungen oftmals ungeschützt auf dem Kai liegen und ein Hindernis sind.

Der Erfindung liegt die Aufgabe zugrunde, eine Vorrichtung zur Verbindung eines Schiffes mit einem landseitigen Versorgungsnetz aufzuzeigen, bei welcher die Energieversorgungsleitungen möglichst nicht oder nur sehr kurz über den Kai geführt werden muss, so dass sie umfahren werden kann.

Die Erfindung löst diese Aufgabe durch eine Vorrichtung mit den Merkmalen des Patentanspruches 1.

Die Unteransprüche betreffen vorteilhafte Weiterbildungen der Erfindung.

Die erfindungsgemäße Vorrichtung dient zur Verbindung eines Schiffes mit einem landseitigen Versorgungsnetz. Sie umfasst eine Passagierbrücke. Insbesondere ist das Schiff zum Personentransport vorgesehen, insbesondere ist es ein Kreuzfahrtschiff. Die Passagierbrücke ist dauerhaft landseitig auf dem Kai angeordnet. Derartige Passagierbrücken besitzen zumeist elektromechanische Hubsysteme in den Tragsäulen, die eine Einstiegshöhe von teilweise über 10 m über dem Meeresspiegel ermöglichen. Die Passagierbrücken können sich in Längsrichtung, Querrichtung und auch in Hochrichtung bewegen, um einen Tidenhub oder Lageveränderungen bei der Abfertigung des Schiffes sowie ein Rollen des Schiffes auszugleichen. Die Erfindung macht sich diese Eigenschaften der Passagierbrücke zunutze, indem die Passagierbrücke dafür verwendet wird, eine Energieversorgungsleitung zur Versorgung des Schiffes unmittelbar an der Passagierbrücke anzuordnen.

Da Passagierbrücken eine erhebliche Länge haben können, von teilweise über 50 m, kann mittels der Passagierbrücken auch eine erhebliche Strecke der Energieversorgungsleitung bis zum Schiff überbrückt werden. Die erfindungsgemäße Vorrichtung sieht zudem eine Übergabeeinrichtung vor, um eine an die Energieversorgungsleitung angeschlossene Kupplungseinheit zu einer schiffseitigen Kupplungseinheit zu führen. Der Begriff Kupplungseinheit erfasst sowohl Stecker als auch Steckkupplungen. Eine Kupplungseinheit kann mehrere Stecker und/oder Steckkupplungen umfassen. Es können daher auch mehrere Energieversorgungsleitungen vorgesehen sein.

Die Erfindung hat den Vorteil, dass die Übergabeeinrichtung nicht an unterirdische Anschlusspunkte für die Versorgungsleitungen angeschlossen werden muss. Auch muss die Energieversorgungsleitung generell nicht unterirdisch verlegt werden. Die Energieversorgungsleitung an der Passagierbrücke ermöglicht es dadurch, bauliche Eingriffe am Kai zu vermeiden.

Die Übergabeeinrichtung dient zur Handhabung der relativ schweren landseitigen Kupplungseinheit/Stecker, insbesondere da die schiffseitigen Anschlusspunkte oftmals in mehreren Metern Höhe über dem Meeresspiegel liegen.

In einer ersten Ausführungsform der Erfindung wird die Übergabeeinrichtung von der Passagierbrücke getragen. Das bedeutet, dass die Übergabeeinrichtung selbst an der Passagierbrücke befestigt ist. Besonders bevorzugt ist die Übergabeeinrichtung unterhalb der Passagierbrücke angeordnet.

Eine Übergabeeinrichtung in diesem Sinne besitzt bewegliche Module, insbesondere einen verlagerbaren Arm, zur Übergabe der Kupplungseinheit/des Steckers. Die Übergabe kann in erheblicher Höhe über dem Meeresspiegel bzw. über dem Kai erfolgen, so dass der Bereich der Passagierbrücke von Fahrzeugen auf dem Kai problemlos unterfahren werden kann. Darüber hinaus erstreckt sich die Übergabeeinrichtung vorzugsweise nicht über die Länge der Passagierbrücke hinaus, kann jedoch am vorderen Ende der Passagierbrücke angeordnet sein bzw. sogar zusammen mit dem vorderen Ende der Passagierbrücke verlagert werden, wenn die Passagierbrücke ausgefahren wird. Alternativ oder zusätzlich kann die Distanz zu dem Schiff durch den verlagerbaren Arm überbrückt werden. Bevorzugt wird zuerst die Passagierbrücke platziert und im zweiten Schritt die Landstromverbindung hergestellt.

Ein weiterer Vorteil der Erfindung ist, dass bei einer Passagierbrücke stets eine Nachführung in Anpassung an die Bewegung des Schiffes erfolgt. Diese Nachführung ist auch bei der Landstromversorgung erforderlich, damit die Kupplungseinheiten und Energieversorgungsleitungen nicht überlastet werden. Erfindungsgemäß kann die in die Passagierbrücke integrierte Nachführung der Passagierbrücke auch dafür genutzt werden, die Landstromversorgung nachzuführen, in dem Sinne, dass keine zwei unabhängig voneinander arbeitenden Systeme erforderlich sind. Je näher die schiffseitige Kupplungseinheit am schiffseitigen Übergang der Passagierbrücke angeordnet ist, desto geringer sind die Abweichungen zwischen diesen beiden Punkten, wenn sich das Schiff bewegt, z.B. rollt. Grundsätzlich werden die Versorgungsleitungen mit einer hinreichenden Länge bereitgestellt, so dass jegliche Bewegungen des Schiffes ausgeglichen werden können. Die Kupplungseinrichtungen werden nach dem Kuppeln in Zugentlastungen gehalten.

In einer alternativen Ausgestaltung der Erfindung befindet sich an der Passagierbrücke ein Übergabepunkt der Energieversorgungsleitung zur Verbindung mit einer Übergabeeinrichtung, die mobil auf dem Kai positionierbar ist. Eine mobil auf dem Kai positionierbare Übergabeeinrichtung ist bis auf die angeschlossene Energieversorgungsleitung nicht mechanisch fest mit der Passagierbrücke verbunden, sondern kann unabhängig von der Passagierbrücke auf dem Kai bewegt werden. Die Übergabeeinrichtung hat hierzu ein Fahrgestell. Die Besonderheit dieser Übergabeeinrichtung besteht allerdings darin, dass sie an die Passagierbrücke angeschlossen wird oder ist, d.h. dass der Übergabepunkt für die Energieversorgung an der Passagierbrücke angeordnet ist. Auch in diesem Fall befindet sich die landseitige Energieversorgungsleitung an der Passagierbrücke und erstreckt sich ohne Eingriff in die Baustruktur des Kais bis nahe zum Schiff. Das bedeutet gleichzeitig, dass eine Verbindung zwischen der Übergabeeinrichtung und dem Übergabepunkt der Energieversorgungsleitung vergleichsweise kurz ausfallen kann. Der Übergabepunkt an der Passagierbrücke befindet sich vorzugsweise witterungsgeschützt unterhalb der Passagierbrücke. Der Übergabepunkt kann beispielsweise an einer Tragstruktur, beispielsweise an einem Fahrgestell der Passagierbrücke angeordnet sein, so dass es keinerlei Hubmittel bedarf, um den Übergabepunkt mit der Übergabeeinrichtung zu verbinden. Eine Besonderheit der erfindungsgemäßen Vorrichtung ist mithin, dass der Übergabepunkt zusammen mit der Passagierbrücke verlagert werden kann, zumindest in Längsrichtung des Kais, wenn die Passagierbrücke in Längsrichtung des Kais verlagert wird.

Die Übergabeeinrichtung besitzt vorzugsweise wenigstens einen steuerbaren Arm, um die landseitige Kupplungseinheit zu der schiffseitigen Kupplungseinheit zu führen. Die schiffseitige Kupplungseinheit kann in einer Höhe von mehreren Metern über dem Meeresspiegel angeordnet sein, so dass sie nicht ohne weiteres von dem Kainiveau erreichbar ist. Die mobile Übergabeeinrichtung vergrößert den Aktionsradius der erfindungsgemäßen Vorrichtung, so dass auch schiffseitige Kupplungseinheiten in größerer Entfernung zur Passagierbrücke erreicht werden können, insbesondere solche, die mit einem Arm unterhalb der Passagierbrücke nicht erreicht werden können. Die Erfindung sieht auch die Möglichkeit vor, dass je nach Schiffstyp die eine oder die andere Übergabeeinrichtung zum Einsatz kommt, d.h. dass es eine Übergabeeinrichtung gibt, die von der Passagierbrücke getragen wird und eine zweite mobile Übergabeeinrichtung

Die erfindungsgemäße Vorrichtung dient zur Versorgung von Schiffen mit Energie, insbesondere Strom. Die Erfindung schließt ein, dass weitere Versorgungsleitungen angeschlossen werden können. Hierunter sind beispielsweise Datenleitungen zu verstehen, um das Schiff an ein landseitiges Kommunikationsnetz anzuschließen. Die Vorrichtung kann dahingehend erweitert werden, dass zusätzliche Versorgungsleitungen auf diese Art und Weise angeschlossen werden können. Bei den zusätzlichen Versorgungsleitungen kann es sich auch um Rohrleitungen handeln, die den Transport von Fluiden und riesel- oder pumpfähigen Feststoffen sowie der Übertragung von mechanischer und thermischer Energie dienen. Der Begriff Versorgungsleitung schließt ein, dass die Versorgung in beide Richtungen erfolgen kann, d.h. von der Wasserseite zur Landseite und von der Landseite zur Wasserseite.

Die Erfindung wird nachfolgend anhand von zwei in den Zeichnungen rein schematisch dargestellten Ausführungsbeispielen näher erläutert. Es zeigen
- Figur 1: eine erste Ausführungsform einer erfindungsgemäßen Vorrichtung mit einer Übergabeeinrichtung an der Passagierbrücke und
- Figur 2: eine zweite Ausführungsform der erfindungsgemäßen Vorrichtung mit einer separaten, mobilen Übergabeeinrichtung.

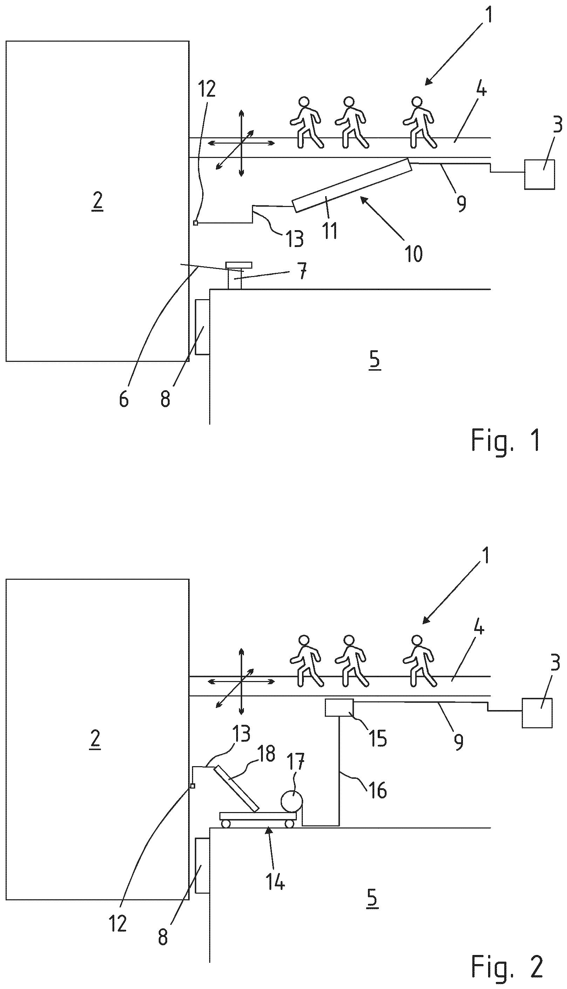

Die Figur 1 zeigt eine Vorrichtung 1 zur Verbindung eines Schiffes 2 mit einem landseitigen Versorgungsnetz 3. Das landseitige Versorgungsnetz 3 ist hier rein symbolisch dargestellt und stellt insbesondere elektrische Energie in Form von Landstrom bereit.

Die Vorrichtung 1 umfasst ferner eine Passagierbrücke 4, die dauerhaft landseitig auf einem Kai 5 befestigt ist. Die Pfeile an der Passagierbrücke 4 verdeutlichen, dass ihr schiffseitiges Ende in alle Raumrichtungen verlagerbar ist, um Bewegungen des Schiffes 2 bei der Abfertigung und bedingt durch Umwelteinflüsse auszugleichen. Das Die Abfertigung des Schiffes 2 erfolgt nur dann, wenn das Schiff 2 an dem Kai 5 festgemacht ist. Eine Festmacherleine 6 an einem Poller 7 sowie ein Fender 8 zwischen dem Kai und dem Schiff verdeutlichen symbolisch, dass das Schiff festgemacht hat.

Die Figur 1 zeigt, dass unterhalb der Passagierbrücke 4 eine Energieversorgungsleitung 9 angeordnet ist, die an das landseitige Versorgungsnetz 3 angeschlossen ist. Diese Energieversorgungsleitung 9 führt zu einer Übergabeeinrichtung 10 mit einem verlagerbaren Arm 11. Die Übergabeeinrichtung 10 dient dazu, eine Kupplungseinheit 12 endseitig einer Anschlussleitung 13 einer nicht näher dargestellten schiffseitigen Kupplungseinheit zuzuführen, damit das Schiff 2 an das landseitige Versorgungsnetz 3 angeschlossen werden kann. Die Besonderheit besteht darin, dass die Energieversorgungsleitung 9 nicht im oder auf der Oberfläche des landseitigen Kais 5 verläuft, sondern in einer Höhe, in welcher die Passagierbrücke 4 unterfahren werden kann. Auf diese Weise ist die Energieversorgungsleitung 9 vor Beschädigungen geschützt. Gleichzeitig wird mit der Bewegung der Passagierbrücke 4 zum Ausgleich von Schiffsbewegungen auch die Übergabeeinrichtung 10 bewegt. Es bedarf daher an der Übergabeeinrichtung 10 keiner zusätzlichen Ausgleichselemente, außer einer immer vorhandenen Schlaufe in der Anschlussleitung 13, um Restbewegungen auszugleichen und das Handling insbesondere bei manueller Kupplung zu ermöglichen.

Das Ausführungsbeispiel der Figur 2 unterscheidet sich von demjenigen der Figur 1 durch eine mobile Übergabeeinrichtung 14, welche die stationäre Übergabeeinrichtung 10 in Figur 1 ersetzt. Die in Figur 1 eingeführten Bezugszeichen werden für im wesentlichen funktionsgleiche Komponenten auch in der Figur 2 verwendet.

Die Energieversorgungsleitung 9, die an das landseitige Versorgungsnetz 3 angeschlossen ist, endet in einem Übergabepunkt 15. Dieser Übergabepunkt 15 ist über eine Anschlussleitung 16 mit der mobilen Übergabeeinrichtung 14 verbunden. Eine Leitungstrommel 17 der Übergabeeinrichtung 14 gibt die notwendige Länge der Anschlussleitung 16 frei. Je nach Position der mobilen Übergabeeinrichtung 14 auf dem Kai 5 ist die Anschlussleitung 16 mehr oder weniger aufgewickelt. Die Übergabeeinrichtung 14 besitzt einen rein schematisch dargestellten Arm 18, der sich in Richtung zum Schiff 2 erstreckt. An der Anschlussleitung 13 befindet sich wiederum die endseitige Kupplungseinheit 12 zur Verbindung mit der schiffseitigen Kupplungseinheit. Wenn das Schiff 2 abgelegt, wird die Passagierbrücke 4 zurückgefahren. Auch die Landstromversorgung kann beendet werden, die mobile Übergabeeinrichtung 14, die ein Fahrgestell zum Fahren auf dem Kai aufweist, wird zurückgefahren.

Beide Ausführungsformen, d.h. diejenige mit einer Übergabeeinrichtung 10 an der Passagierbrücke 4 sowie die mit einer mobilen Übergabeeinrichtung 14 auf dem Kai 5, haben den Vorteil, dass die Energieversorgungsleitung 9 nicht in den Kai 5 eingebettet werden muss bzw. auf der Oberfläche des Kais 5 aufliegt. Die Energieversorgungsleitung 9 ist maximal vor Beschädigungen geschützt und behindert den Betrieb auf dem Kai nicht.

### Bezugszeichen:

- 1 -: Vorrichtung
- 2 -: Schiff
- 3 -: Landseitiges Versorgungsnetz
- 4 -: Passagierbrücke
- 5 -: Kai
- 6 -: Festmacherleine
- 7 -: Poller
- 8 -: Fender
- 9 -: Energieversorgungsleitung
- 10 -: Übergabeeinrichtung
- 11 -: Arm
- 12 -: Landseitige Kupplungseinheit
- 13 -: Anschlussleitung
- 14 -: Mobile Übergabeeinrichtung
- 15 -: Übergabepunkt
- 16 -: Anschlussleitung zwischen 14 und 15
- 17 -: Leitungstrommel
- 18 -: Arm

## Patentansprüche

1. Vorrichtung (1) zur Verbindung eines Schiffes mit einem landseitigen Versorgungsnetz, umfassend eine Passagierbrücke (4), wobei die Passagierbrücke (4) dauerhaft auf einem landseitigen Kai (5) angeordnet ist, wobei an der Passagierbrücke (4) eine Energieversorgungsleitung (9) zur Versorgung des Schiffes (2) mit Landstrom während der Schiffsabfertigung angeordnet ist, und mit einer Übergabeeinrichtung (10, 14), um eine an die Energieversorgungsleitung (9) angeschlossene Kupplungseinheit (12) zu einer schiffseitigen Kupplungseinheit zu führen.

2. Vorrichtung (1) nach Anspruch 1, **dadurch gekennzeichnet, dass** die Übergabeeinrichtung (10) von der Passagierbrücke (4) getragen wird.

3. Vorrichtung (1) nach Anspruch 2, **dadurch gekennzeichnet, dass** die Übergabeeinrichtung (10) unterhalb der Passagierbrücke (4) angeordnet ist.

4. Vorrichtung (1) nach Anspruch 1, **dadurch gekennzeichnet, dass** an der Passagierbrücke (4) ein Übergabepunkt (15) der Energieversorgungsleitung (9) zur Verbindung mit der Übergabeeinrichtung (15) angeordnet ist, wobei die Übergabeeinrichtung (14) mobil auf dem Kai (5) positionierbar ist.

5. Vorrichtung (1) nach einem der Ansprüche 1 bis 4 **dadurch gekennzeichnet, dass** die Übergabeeinrichtung (10, 14) wenigstens einen steuerbaren Arm (11) aufweist, um die landseitige Kupplungseinheit (12) zu der schiffseitigen Kupplungseinheit zu führen.
